# EUROPEAN PATENT SPECIFICATION

(11) **EP 0 463 418 B1**
(45) Date of publication and mention of the grant of the patent: **29.07.1998**
(21) Application number: 91109162.7
(22) Date of filing: 05.06.1991
(51) Int. Cl.: H03L 7/18, G09G 1/04, G09G 1/00

(54) **A broad operational range, automatic device for the change of frequency in the horizontal deflection of multisynchronization monitors**
Automatische Einrichtung mit einem breiten Anwendungsbereich zur Veränderung der Horizontalablenkfrequenz von multisynchronen Monitoren
Dispositif automatique à large champ d'opération pour changer la fréquence de déflection horizontale de moniteurs multisynchrones

(30) Priority: 27.06.1990 IT 2078490
(43) Date of publication of application: 02.01.1992
(73) Proprietor: SGS-THOMSON MICROELECTRONICS s.r.l., 20041 Agrate Brianza (Milano) (IT)
(72) Inventor: Gornati, Silvano, I-20010 Casorezzo Milano (IT); Merlo, Mauro, I-27020 Torre d'Isola Pavia (IT); Zuffada, Maurizio, I-20153 Milano (IT); Lietar, Loic, F-75019 Paris (FR)
(74) Representative: Perani, Aurelio

(56) References cited:
- EP-A- 93 433
- DE-A- 2 940 482
- DE-A- 3 708 538
- GB-A- 2 141 003
- US-A- 3 753 142
- US-A- 4 399 459

## Description

This invention relates to a broad operational range, automatic device for the change of frequency in the horizontal deflection of multi-synchronization monitors, as defined in the preamble of claim 1 and as known from US-A-4 399 459.

As it is known, the equipment and monitor apparatus market underwent drastic changes in recent years, especially in the sector of personal computers.

In fact, technological developments have led the manufacturers to break every now and then into the market with some new graphic standards directed to improve the picture quality ever more, both in respect of word processing and the CAD/CAM (Computer Aided Design/Computer Aided Manufacturing) functions.

This continued development involves, however, recurrent changes in the working frequencies of the above-mentioned monitors having regard to the horizontal and vertical deflection features of the picture-defining electron beam.

It will be appreciated that such continued changes are bound to add considerably to the video equipment manufacturer's efforts to follow the market trend. In fact, due to monitors being equpped with deflection circuits which operate at a pre-determined synchronization frequency, a monitor is rendered useless if that frequency is changed.

Accordingly, there exists a demand from manufacturers for deflection circuits capable of operating on a plurality of synchronization frequencies. But no integrated component has been available on the market heretofore which could meet such a demand.

The prior art merely provides deflection circuits comprised of discrete components, which have the obvious disadvantage of occupying a large circuit area and, therefore, burdening the monitor circuitry. In addition, such discrete components carry high prices which are not always matched by their performance.

DE-A 37 08 538 discloses an oscillator circuit comprising a digital PLL with a settable counter for a coarse selection of the output frequency. The digital PLL receives a variable reference frequency provided by a reference oscillator. A frequency meter compares the variable frequency with a frequency standard. The reference frequency oscillator is adjusted in accordance with the comparison result.

The underlying technical problem of this invention is to provide an automatic device for frequency changes in the horizontal deflection of multi-synchronization monitors, which has such structural and functional features as to enable continuous synchronization through a broad frequency range, e.g. between 10 kHz and 100 kHz, while ensuring excellent performance anywhere within this utilization range.

This problem is solved by an automatic device as set out in claim 1.

The features and advantages of a device according to the invention will become apparent from the following detailed description of an embodiment thereof, given by way of illustration and not of limitation with reference to the accompanying drawings.

In the drawings:

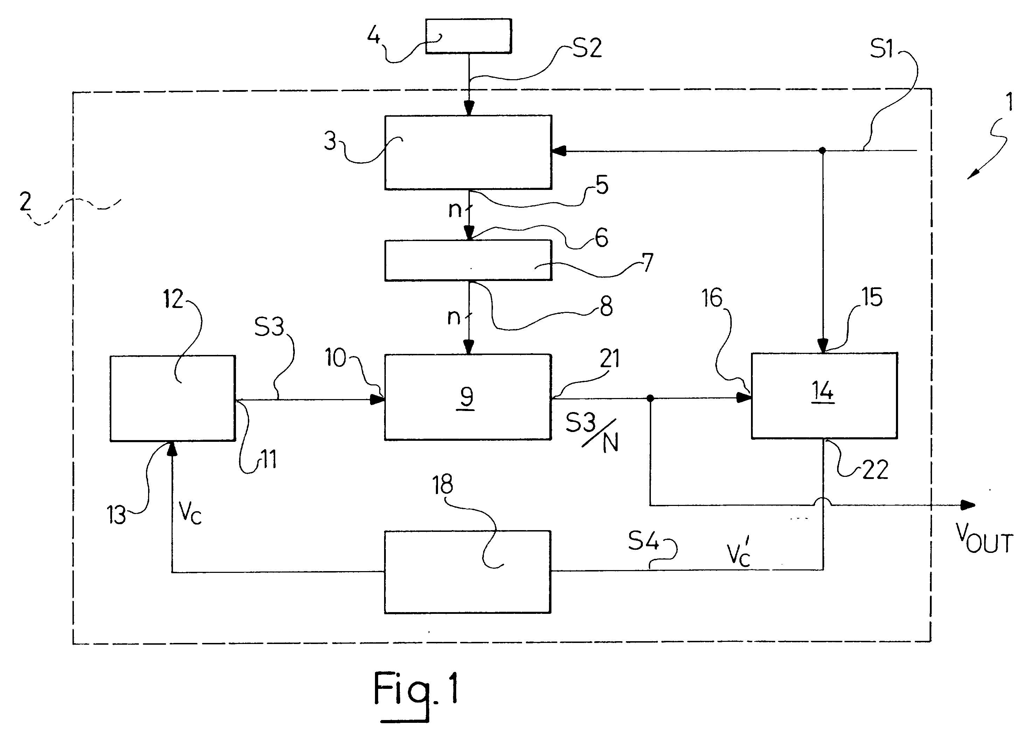

Figure 1 is a block diagram of the device according to this invention; and
Figure 2 is a diagramatic representation of waveforms of signals appearing in the device of Figure 1.

With reference to the drawing figures, generally and schematically shown at 1 is an automatic device for enabling the frequency fh in the horizontal deflection of multi-synchronization monitors, not shown because conventional, to be changed.

The device 1 is particularly, but not exclusively, intended for operation within a broad range of frequencies extending from 10 kHz to 100 kHz.

This device 1 comprises an integrated circuit 2 incorporating a circuit portion 3 which is comprised of a frequency meter receiving a synchronization signal S1 at the frequency fh on one input.

The meter 3 receives, on another input, a clock signal S2 derived, for example, from a high-accuracy crystal oscillator 4 outside the circuit 2.

The meter 3 has a plurality n of outputs 5, each connected to a corresponding input 6 of a storage block 7 adapted to store the binary (n-bit) coding of signal S1 frequency value ph.

The storage block 7, in turn, comprises a plurality n of outputs, shown at 8, which are connected to the input side of a counter 9.

The counter 9 has an input 10 which receives a clock signal S3 supplied from the output 11 of a voltage-controlled oscillator VC0.

The oscillation frequency of that device 12 is depending on the value of a control voltage Vc applied to an input 13.

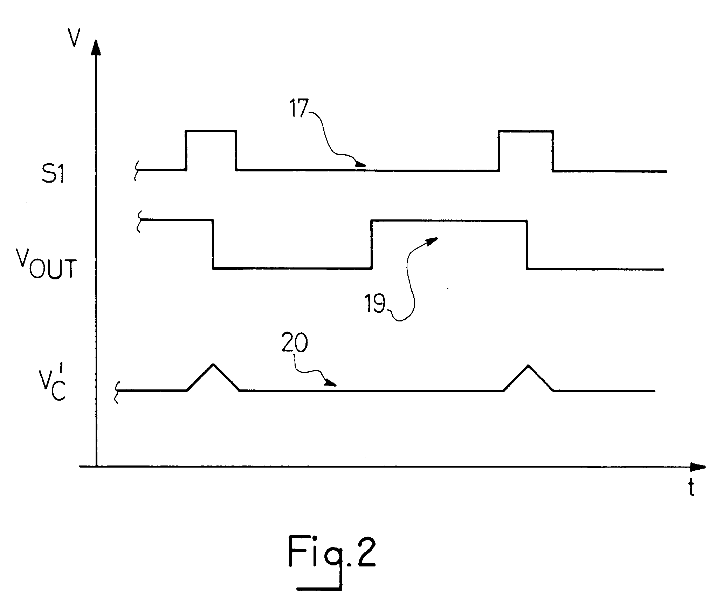

The structure of the integrated circuit 2 further comprises a phase comparator 14 which receives the signal S1 on one input 15. Another input 16 of that comparator 14 is directly connected to an output 21 of the counter 9 which is also a signal output for the circuit 2, producing a voltage value Vout plotted on curve 19 in Figure 2.

The phase comparator 14 produces, on an output 22, a Vc voltage signal S4 which is applied to the control input 13 of oscillator 12 through a filter 18 adapted to reduce the ripple present on the Vc voltage signal.

The operation of the automatic device according to the invention will be now described with reference to a starting condition with the analog synchronization signal S1, having a frequency fh in the 10 to 100 kHz range, input to the frequency meter 3.

Using the clock signal S2, the meter 3 takes a measurement of the frequency of the analog signal S1, while also performing an analog-to-digital conversion whereby the binary coding N for the value of the frequency fh is presented on the n inputs of the memory 7.

Based on such coding and the value of signal S3 supplied by the oscillator 12, the counter 9 outputs an analog signal whose frequency is the same as that of signal S3 divided by the value N.

This device 1 can effect a so-called latching of the frequency to the variation of signal S1.

In this respect, it is a peculiar feature of this invention that the value of the control voltage Vc of the oscillator 12 is only stable with the signals S1 and S3/N, on the inputs 15 and 16 of the phase comparator 14, at the same frequency.

With said signals under such a condition, as respectively illustrated by the waveforms 17 and 19 in Figure 2, it is customarily recognized that they are in quadrature and such as to generate on the comparator 14 output a voltage Vc' the continuous component whereof is stable over time as illustrated by curve 20.

Under any other conditions with the value of the frequency fh other than the value of the frequency of signal S3/N, the continuous component of voltage Vc' is unstable and the device unable to operate in a stationary condition. Consequently, the value of the control voltage Vc of oscillator 12 will also be unstable.

The unstable condition of that control voltage brings about a continued variation in the frequency of signal S3, until said frequency will coincide with the value fh of the input signal S1.

The frequency meter 3 is able to measure the value of fh with an approximation of plus/minus 1%. Thus, if the frequency fh undergoes a variation below this small range, the meter 3 may be unable to detect such a variation. In that event, however, the value of the coding N stored in block 7 would still remain unchanged, and the oscillator 12 would alter the value of its own operating frequency so as to allow fh to be latched.

It may be appreciated from the foregoing description that the device 1 of this invention allows automatic tuning of the oscillator 12 within a broad range of frequencies fh of the input signal S1. This is ensured by that the counter 9, as suitably programmed, makes the frequencies of the oscillator 12 comparable to those of the input synchronizations fh.

The integrated circuit embodying this invention has shown to be peculiarly fast in effecting the frequency latch, thereby greatly enhancing the performances of discrete components made in accordance with the prior art.

Another major advantage of such an integrated circuit is that the oscillator incorporated thereto will operate at a frequency which is much higher than the frequency of the synchronization signal, which keeps the frequency value stable over time, additionally to providing very high performance levels.

Further advantages come from the cost reduction afforded by such a circuit and the ability to accommodate the frequency range of all the current graphic standards for multi-synchronization monitors.

## Claims

1. A broad operational range, automatic device for the change of frequency in the horizontal deflection of a multi-synchronization monitor, comprising an integrated circuit (2) incorporating,
a connection for receiving an analog synchronization signal (S1) having said frequency on a circuit input;
a phase comparator (14) having two inputs (15, 16) and receiving said synchronization signal (S1) on one (15) of said two inputs (15, 16);
a voltage controlled oscillator (12) adapted to generate at its output (11) a signal (S3) having a frequency depending on a voltage (Vc) applied at an input (13) thereof which is linked operatively to an output (22) of said phase comparator (14);
a counter (9) having a first input (10) connected to said oscillator (12) output (11) and an output (21) connected to the other input (16) of said phase comparator inputs (15, 16) and being operative to generate at its output (21) a signal (S3/N) having a frequency equal to the division of the frequency of the output signal (S3) from the oscillator (12) by a division factor (N);
characterized in that said integrated circuit comprises a frequency meter (3) connected to said circuit input for receiving said analog synchronization signal (S1) and operative to generate a numerical value (N) corresponding to the frequency of said synchronization signal at one output and in that said counter (9) has a second input linked operatively to the meter (3) output (5) for receiving said numerical value (N) corresponding to the frequency of the synchronization signal (S1) to be used as the counter division factor, said counter output (21) being connected to the integrated circuit output.

2. A device according to Claim 1, characterized in that, within said circuit (2), said frequency meter (3) has a plurality (n) of output wires, each connected to a corresponding input (6) of a storage block (7) adapted to store said numerical value (N) as a binary coding of the frequency value of the synchronization signal (S1).

3. A device according to Claim 2, characterized in that said counter second input has a plurality (n) of input wires and in that said storage block (7) has a plurality (n) of output wires connected to said plurality of input wires of said counter (9).

4. A device according to Claim 1, characterized in that, connected between the output (22) of the phase comparator (14) and the input of the voltage-controlled oscillator (12), is a filter (18) for reducing the oscillation of the voltage signal output by the comparator.

## Patentansprüche

1. Eine automatische Vorrichtung mit einem breiten Betriebsbereich für die Änderung einer Frequenz der horizontalen Ablenkung eines Multisynchronisationsmonitors, wobei dieselbe eine integrierte Schaltung (2) mit folgenden Merkmalen aufweist:
einer Verbindung zum Empfangen eines analogen Synchronisationssignals (S1), das die Frequenz aufweist, auf einem Schaltungseingang;
einem Phasenkomparator (14), der zwei Eingänge (15, 16) aufweist, und der das Synchronisationssignal (S1) auf einem (15) der zwei Eingänge (15, 16) empfängt;
einem spannungsgesteuerten Oszillator (12), der angepaßt ist, um an einem Ausgang (11) desselben ein Signal (S3) mit einer Frequenz zu erzeugen, die von einer Spannung (Vc) abhängt, die an einen Eingang (13) desselben, der wirksam mit einem Ausgang (22) des Phasenkomparators (14) verbunden ist, angelegt ist;
einem Zähler (9), der einen ersten Eingang (10), der mit dem Ausgang (11) des Oszillators (12) verbunden ist, und einen Ausgang (21), der mit dem anderen Eingang (16) der Phasenkomparatoreingänge (15, 16) verbunden ist, aufweist, und der wirksam ist, um an dem Ausgang (21) desselben ein Signal (S3/N) mit einer Frequenz, die gleich der Division der Frequenz des Ausgangssignals (S3) von dem Oszillator (12) durch einen Divisionsfaktor (N) ist, zu erzeugen;
dadurch gekennzeichnet, daß die integrierte Schaltung einen Frequenzmesser (3) aufweist, der mit dem Schaltungseingang zum Empfangen des analogen Synchronisationssignals (S1) verbunden ist, und wirksam ist, um einen numerischen Wert (N) zu erzeugen, der der Frequenz des Synchronisationssignals an einem Ausgang entspricht, und dadurch gekennzeichnet, daß der Zähler (9) einen zweiten Eingang aufweist, der wirksam mit dem Ausgang (5) des Messers (3) verbunden ist, zum Empfangen des numerischen Werts (N), der der Frequenz des Synchronisationssignals (S1) entspricht und der als Zählerdivisionsfaktor verwendet werden soll, wobei der Zählerausgang (21) mit dem Ausgang der integrierten Schaltung verbunden ist.

2. Eine Vorrichtung gemäß Anspruch 1, dadurch gekennzeichnet, daß innerhalb der Schaltung (2) der Frequenzmesser (3) eine Mehrzahl (n) von Ausgangsleitungen aufweist, wobei jede derselben mit einem entsprechenden Eingang (6) eines Speicherungsblocks (7) verbunden ist, der angepaßt ist, um den numerischen Wert (N) als eine binäre Codierung des Frequenzwerts des Synchronisationssignals (S1) zu speichern.

3. Eine Vorrichtung gemäß Anspruch 2, dadurch gekennzeichnet, daß der zweite Eingang des Zählers eine Mehrzahl (n) von Eingangsleitungen aufweist, und daß der Speicherungsblock (7) eine Mehrzahl (n) von Ausgangsleitungen aufweist, die mit der Mehrzahl von Eingangsleitungen des Zählers (9) verbunden sind.

4. Eine Vorrichtung gemäß Anspruch 1, dadurch gekennzeichnet, daß zwischen den Ausgang (22) des Phasenkomparators (14) und den Eingang des spannungsgesteuerten Oszillators (12) ein Filter (18) geschaltet ist, zum Reduzieren der Oszillation der Spannungssignalsausgabe des Komparators.

## Revendications

1. Dispositif automatique à large gamme de fonctionnement pour la modification de la fréquence de déviation horizontale d'un écran multisynchrone, comprenant un circuit intégré (2) comportant :
une connexion destinée à recevoir un signal de synchronisation analogique (S1) ayant ladite fréquence sur une entrée du circuit ;
un comparateur de phase (14) ayant deux entrées (15, 16) et recevant ledit signal de synchronisation (S1) sur l'une (15) desdites deux entrées (15, 16) ;
un oscillateur commandé en tension (12) conçu pour générer à sa sortie (11) un signal (S3) ayant une fréquence dépendant d'une tension (Vc) appliquée à une entrée (13) de celui-ci qui est fonctionnellement reliée à une sortie (22) dudit comparateur de phase (14) ;
un compteur (9) ayant une première entrée (10) connectée à ladite sortie (11) de l'oscillateur (12) et une sortie (21) connectée à l'autre entrée (16) desdites entrées (15, 16) du comparateur de phase et ayant pour fonction de générer à sa sortie (21) un signal (S3/N) ayant une fréquence égale à la division de la fréquence du signal de sortie (S3) de l'oscillateur (12) par un facteur de division (N) ;
caractérisé en ce que ledit circuit intégré comprend un fréquencemètre (3) connecté à ladite entrée de circuit pour recevoir ledit signal de synchronisation analogique (S1) et ayant pour fonction de générer une valeur numérique (N) correspondant à la fréquence dudit signal de synchronisation à une sortie et en ce que ledit compteur (9) a une seconde entrée reliée fonctionnellement à la sortie (5) du fréquencemètre (3) pour recevoir ladite valeur numérique (N) correspondant à la fréquence du signal de synchronisation (S1), devant être utilisée en tant que facteur de division du compteur, ladite sortie (21) de compteur étant connectée à la sortie du circuit intégré.

2. Dispositif selon la revendication 1, caractérisé en ce que, dans le circuit (2), ledit fréquencemètre (3) a une pluralité (n) de conducteurs de sortie, chacun connecté à une entrée correspondante (6) d'un bloc de mémoire (7) conçu pour stocker ladite valeur numérique (N) sous la forme d'un codage binaire de la valeur de la fréquence du signal de synchronisation (S1).

3. Dispositif selon la revendication 2, caractérisé en ce que ladite seconde entrée du compteur a une pluralité (n) de conducteurs d'entrée et en ce que ledit bloc de mémoire (7) a une pluralité (n) de conducteurs de sortie connectés à ladite pluralité de conducteurs d'entrée dudit compteur (9).

4. Dispositif selon la revendication 1, caractérisé en ce qu'un filtre (18) destiné à réduire l'oscillation du signal de tension fourni en sortie par le comparateur est connecté entre la sortie (22) du comparateur de phase (14) et l'entrée de l'oscillateur commandé en tension (12).
